# EUROPEAN PATENT SPECIFICATION

(11) **EP 3 098 125 B1**
(45) Date of publication and mention of the grant of the patent: **28.02.2018**
(21) Application number: 16160820.3
(22) Date of filing: 17.03.2016
(51) Int. Cl.: B60T 7/08, B62L 3/02

(54) **OPERATION AMOUNT DETECTION APPARATUS FOR VEHICLE WITH HANDLEBAR**
BETRIEBSMENGENERKENNUNGSVORRICHTUNG FÜR FAHRZEUG MIT LENKSTANGE
APPAREIL DE DÉTECTION DE QUANTITÉ D'ACTIONNEMENT POUR VÉHICULE AVEC GUIDON

(30) Priority: 20.03.2015 JP 2015057458
(43) Date of publication of application: 30.11.2016
(73) Proprietor: Nissin Kogyo Co., Ltd., Tomi-city Nagano 389-0514 (JP)
(72) Inventor: Goda, Tadahiro, Nagano, 389-0514 (JP)
(74) Representative: Hoffmann Eitle

(56) References cited:
- DE-U1-202005 003 033
- JP-A- 2002 068 067
- JP-A- 2007 091 148

## Description

### FIELD

The present invention relates to an operation amount detection apparatus for a vehicle with a handlebar which is configured to detect an operation amount of a control lever which controls a brake cable or a hydraulic master cylinder which connects to a brake and more particularly to a mounting construction of an angle sensor of the operation amount detection apparatus.

### BACKGROUND

In recent years, in vehicles with a handlebar, it is practiced to measure a brake hydraulic pressure which is generated based on an operation amount of a brake control lever for use in calculation of a braking performance or determination of a failure of a hydraulic line of a brake system. As an operation amount detection apparatus for a vehicle with a handlebar which is configured to measure an operation amount of a brake control lever, there have been those in which an angle sensor is mounted near a brake control lever for detecting a rotation angle of the brake control lever when the control lever is operated for use in calculation of an operation amount of the brake control lever (for example, refer to JP-A-2007-91148).

The angle sensor of JP-A-2007-91148 includes a pushing screw which is attached to the brake control lever, a pressing rod which extends or contracts in association with the rotation of the pushing screw and a cam which rotates in association with the extension or contraction of the pressing rod and detects a rotational displacement amount of the cam as signal information. Thus, the angle sensor includes many parts, and this increases the cost involved in fabrication of the angle sensor and requires a predetermined installation space. In addition, the rotation amount of the control lever is measured by rotating the cam via the pressing rod which operates linearly, leading to fears that there is caused an error in measurement.

### SUMMARY

Then, an object of the invention is to provide an operation amount detection apparatus for a vehicle with a handlebar in which an angle sensor, which can detect an operation amount of a control lever in an ensured fashion, is mounted compactly.

To achieve the above described object, in the present invention, an angle sensor is mounted on a control lever which is mounted rotatably on a lever bracket on a side of the handlebar which faces a front portion of a vehicle body via a pivot and which controls a hydraulic master cylinder or a brake cable which connects to a brake, the angle sensor detects a rotation amount of the control lever, the pivot comprises a hollow portion which is opened at an end in an interior portion thereof, the control lever has a connecting arm mounting portion which is formed at a rotational base portion which is supported pivotally by the pivot so as to be disposed on the same surface as a surface to which the pivot is opened, the angle sensor comprises an operating body comprising a rotational shaft which rotates in association with the rotation of the control lever and a sensor main body configured to detect a rotation amount of the rotational shaft, the operating body comprises integrally a circular disc portion which is disposed rotationally on one side surface of the lever bracket, a rotational center shaft which projects from a central portion of one side surface of the circular disc portion to be inserted rotationally into the hollow portion of the pivot, a connecting arm which projects from an outer circumference of the circular disc portion so that a distal end portion thereof is locked on the connecting arm mounting portion to cause the circular disc portion to rotate in association with the rotation of the control lever, and the rotational shaft which projects from the other side surface of the circular disc portion to be inserted into the sensor main body to rotate in association with the rotation of the circular disc portion, and the sensor main body comprises a housing and a rotation detection device which is accommodated in the housing and which detects a rotation amount of the rotational shaft and calculates an operation amount of the control lever from the rotation amount of the rotational shaft.

Preferably, the angle sensor is mounted on one side surface of the lever bracket via a mounting bracket. Preferably, the control lever is formed so as to be divided into a lever main body which is disposed in front of a grip of the handlebar and a knocker which pushes on a piston of the hydraulic master cylinder, an adjusting member is disposed between the lever main body and the knocker so as to adjust a gripping margin defined between the grip and the lever main body, and the connecting arm mounting portion is formed on the rotational base portion of the lever main body which is supported pivotally by the pivot. Preferably, the lever main body and the knocker are mounted rotatably on the lever bracket via the pivot in such a state that the knocker is inserted between an upper arm and a lower arm which are formed on the rotational base portion of the lever main body, the lever main body comprises a piece member which penetrates the upper arm and the lower arm of the rotational base portion in an up-to-down direction to connect the upper arm and the lower arm together, the adjusting member which is brought into abutment with the knocker at a distal end thereof is disposed on the piece member, the connecting arm mounting portion which is formed by an insertion hole is provided on a lower surface of the piece member, and the connecting arm is inserted into the connecting arm mounting portion to be locked therein.

According to the operation amount detection apparatus for a vehicle with a handlebar of the invention, since the angle sensor is made up of the operating body and the sensor main body, the number of parts involved can be reduced. Since the operating body is mounted to the pivot which supports pivotally the control lever on the lever bracket, the angle sensor can be mounted compact near the control lever. In addition, since the operating body includes integrally the circular disc portion which is disposed rotatably on the one side surface of the lever bracket, the rotational center shaft which projects from the central portion of the one side surface of the circular disc portion to be inserted rotatably in the hollow portion of the pivot, the connecting arm which projects from the outer circumference of the circular disc portion so that the distal end portion is locked on the connecting arm mounting portion, and the rotational shaft which projects from the other side surface of the circular disc portion, it is possible to detect a rotation amount of the control lever by the sensor main body without any error in an ensured fashion.

Further, since the angle sensor is mounted on the one surface of the lever bracket via the mounting bracket, it is possible to mount the angle sensor in a stable fashion. In addition, the control lever is formed so as to be divided into the lever main body and the knocker, the adjusting member is disposed between the lever main body and the knocker to adjust the gripping margin defined between the grip and the lever main body, and the connecting arm mounting portion is formed on the rotational base portion of the lever main body which is supported pivotally by the pivot, whereby it is possible to detect the rotation amount of the control lever in an ensured fashion even though the gripping margin is adjusted. Further, the connecting arm mounting portion is provided to the piece member with which the adjusting member is mounted, whereby the connecting arm mounting portion can be formed easily.

### BRIEF DESCRIPTION OF DRAWINGS

Fig. 1 is an exploded perspective view of a main part of a vehicle with a handlebar which shows an embodiment of the invention.
Fig. 2 is a front view of the main part of the vehicle with a handlebar of the embodiment.
Fig. 3 is a rear view of the main part of the vehicle with a handlebar of the embodiment.
Fig. 4 is a sectional view taken along a line IV-IV in Fig. 2.
Fig. 5 is a sectional view taken along a line V-V in Fig. 2.
Fig. 6 is a sectional view taken along a line VI-VI in Fig. 4.

### DETAILED DESCRIPTION

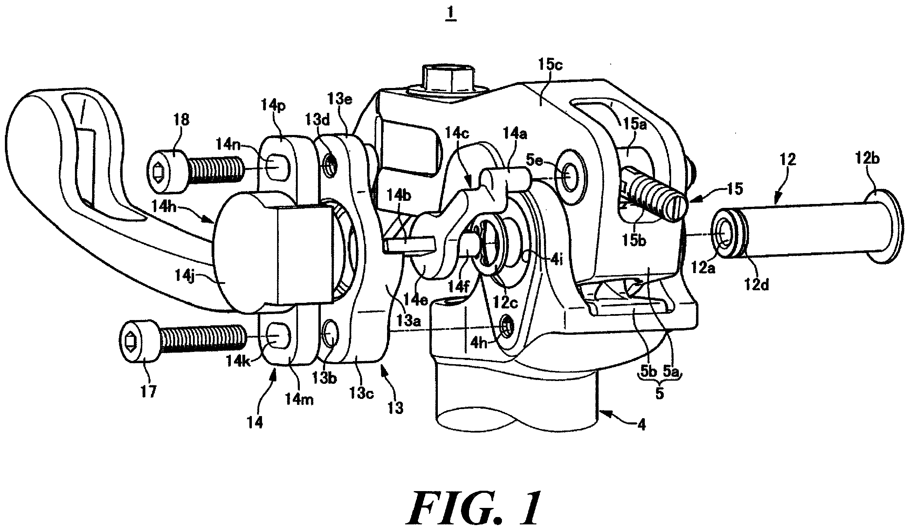

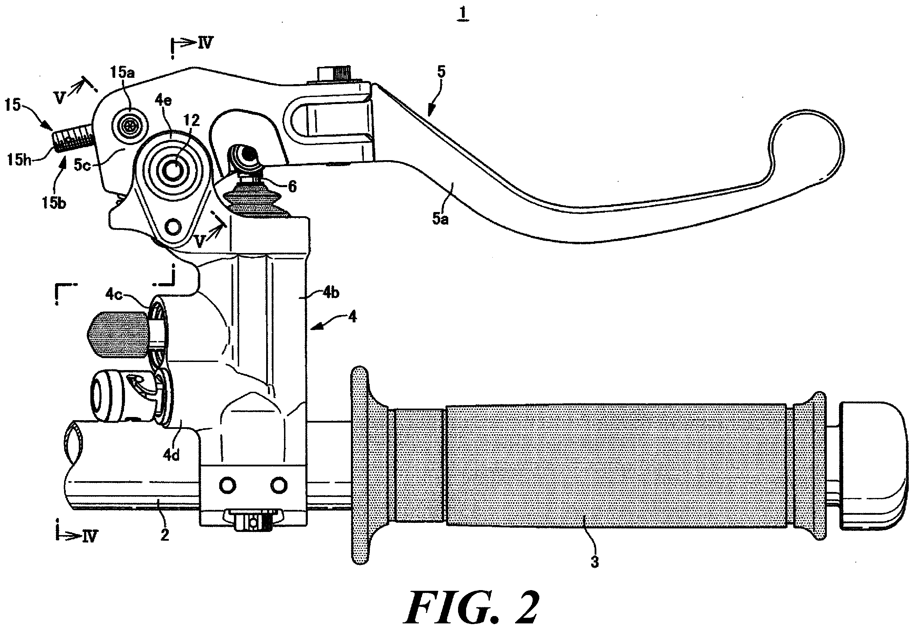

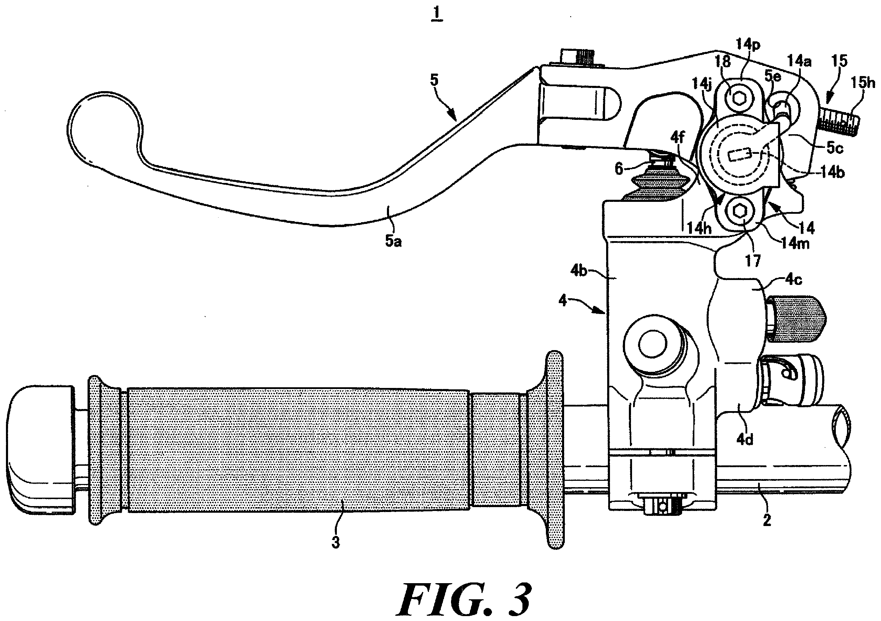

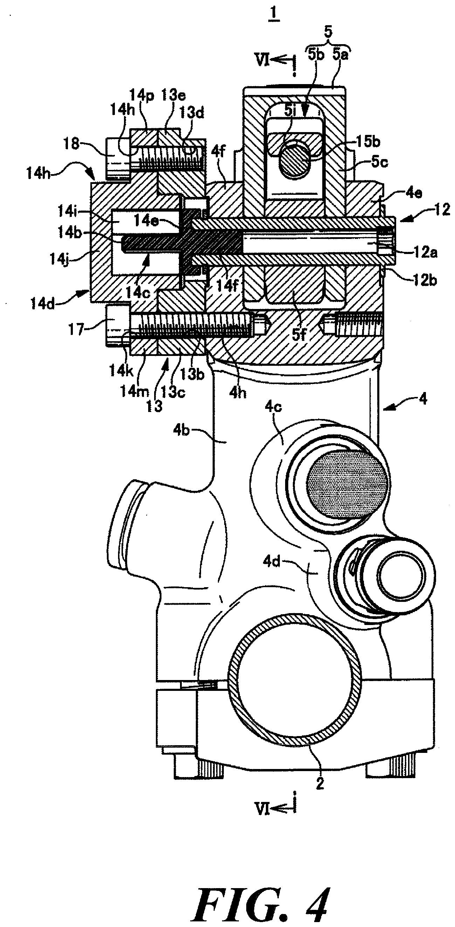

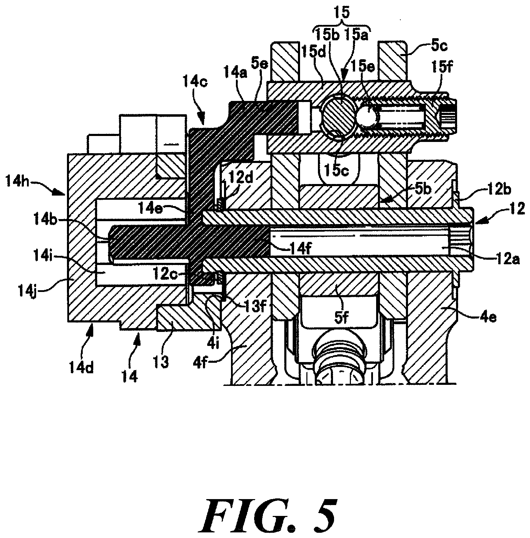

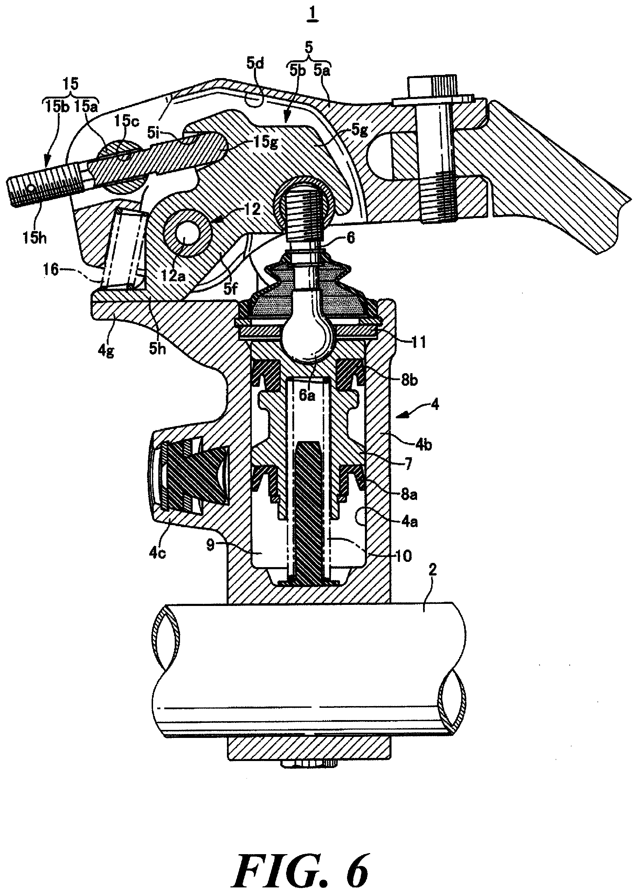

Hereinafter, an embodiment of a vehicle with a handlebar of the invention will be described by reference to Figs. 1 to 6.

A hydraulic master cylinder unit 1 used on a vehicle with a handlebar of this embodiment includes a hydraulic master cylinder 4 which is mounted near an accelerator grip 3 which is positioned at an end of a handlebar 2 which is provided at a front portion of a vehicle body to steer a front wheel (not shown), a control lever 5 which is provided to the hydraulic master cylinder 4 and a push rod 6 which is interposed between the master cylinder 4 and the control lever 5. A piston 7 with cup seals 8a, 8b fitted thereon is inserted into a cylinder bore 4a of the hydraulic master cylinder 4. A hydraulic pressure chamber 9 is defined between the piston 7 and a bottom wall of the cylinder bore 4a. A return spring 10 is provided between the bottom wall of the cylinder bore 4a and the piston 7 while being contracted. The piston 7 is biased in a direction of an opening of the cylinder bore 4a at all times by means of a spring force of the return spring 10. A backward movement limit of the piston 7 is regulated by an abutment with spherical distal end portion 6a of the push rod 6. A piston locking ring member 11 is installed at the opening of the cylinder boar 4a so as to prevent the dislocation of the piston 7.

A first boss portion 4c including a working fluid supply port and a second boss portion 4d including a bleeder hole are provided on a side wall of a cylinder body 4b of the hydraulic master cylinder 4 so as to project therefrom. A pair of upper and lower lever brackets 4e, 4f are provided at an end portion of the cylinder body 4b which faces the front portion of the vehicle body so as to project therefrom with a predetermined space defined between the brackets 4e, 4f. A pivot 12 which secures the control lever 5 rotatably thereon is mounted between the lever brackets 4e, 4f. An angle sensor 14 is mounted on the lower lever bracket 4f via a mounting bracket 13. The angle sensor 14 makes up an operation amount detection apparatus for detecting an operation amount of the control lever 5.

A hollow portion 12a which is opened at a distal end portion of the pivot 12 is formed in an interior of the pivot 12. A large-diameter locking flange portion 12b is formed at a proximal end portion of the pivot 12 so as to prevent the dislocation of the pivot 12. A fitting groove 12d where a locking ring 12c is fitted is provided on a circumference of an outer circumferential surface of a distal end side of the pivot 12. Then, the pivot 12 is inserted so that a distal end thereof is oriented towards the lower lever bracket 4f.

The control lever 5 is made up of a lever main body 5a which is disposed on a front side of the accelerator grip 3 towards the front of the vehicle body and a knocker 5b which is disposed between an inner side of the lever main body 5a and the cylinder body 4b. A gripping margin adjusting mechanism 15 is provided for adjusting a gripping margin which is defined between the control lever 5 and the accelerator grip 3. The lever main body 5a includes a bifurcate first rotational base portion 5c which is supported rotationally by the pivot 12 between the lever brackets 4e, 4f. An accommodating recess portion 5d which accommodates the knocker 5b is formed inside an upper arm and a lower arm of the first rotational base portion 5c. A connecting arm insertion hole 5e (a connecting arm mounting portion of the invention) is opened to a lower surface of the lower arm of the first rotational base portion 5c so that a connecting arm 14a of the angle sensor 14 is inserted therein to be locked.

The knocker 5b has a second rotational base portion 5f which is supported rotatably on the first rotational base portion 5c of the control lever 5 by the pivot 12, an operation arm 5g which projects from the second rotational base portion 5f upwards of the cylinder bore 4a, and a rotation control arm 5h which projects from the second rotational base portion 5f to the rear of the vehicle body. A proximal end of the push rod 6 is attached to a portion of the operation arm 5g which confronts the cylinder bore 4a. The rotation control arm 5h is brought into abutment with a lever support portion 4g of the cylinder body 4b which projects from an end thereof which faces the front of the vehicle body in an axial direction of a handlebar 2, whereby the knocker 5b is prevented from rotating. A spring member 16 is interposed between the rotation control arm 5h and a portion of the lever main body 5a which lies on an inner side of the vehicle body, and this spring member 16 biases the lever main body 5a about the pivot 12 towards the accelerator grip 3.

In the lever main body 5a and the knocker 5b, the second rotational base portion 5f of the knocker 5b is inserted between an upper arm and a lower arm of the first rotational base portion 5c of the lever main body 5a, and both the rotational base portions 5c, 5f are inserted between the lever brackets 4e, 4f so that pivot insertion holes formed in the two rotational base portions 5c, 5f are aligned with similar holes formed in the lever brackets 4e, 4f. Then, the pivot 12 is inserted through the pivot insertion holes formed in the lever brackets 4e, 4f, the lever main body 5a and the knocker 5b. The large-diameter flange portion 12b of the pivot 12 is brought into abutment with the upper lever bracket 4e, and a distal end portion of the pivot 12 is caused to project from the lower lever bracket 4f. Then, the locking ring 12c is securely fitted in the fitting groove 12d. Thus, the lever main body 5a and the knocker 5b are supported so as to rotate about the pivot 12 on the lever brackets 4e, 4f. By adopting this mounting configuration, the opening of the pivot 12 and the connecting arm insertion hole 5e are allowed to be opened downwards. Further, the spring force of the return spring 10 in the interior of the hydraulic pressure chamber 9 acts on the control lever 5 mounted on the hydraulic master cylinder 4 via the piston 7 and the push rod 6 at all times. While the control lever 5 is not operated, the rotation control lever 5h of the knocker 5b is in abutment with the lever support portion 4g, whereby the gripping margin is defined between the lever main body 5a and the accelerator grip 3.

The gripping margin adjusting mechanism 15 includes a piece member 15a which connects the upper arm and the lower arm of the first rotational base portion 5c of the lever main body 5a together and an adjusting member 15b which penetrates the piece member 15a to be brought into abutment with the knocker 5b at a distal end thereof. The piece member 15a includes a cylindrical member 15d including a insertion hole 15c through which the adjusting member 15b is inserted at a middle portion thereof, a closure member 15f which closes an upper opening portion of the cylindrical member 15d and which includes a ball plunger 15e which prevents the dislocation of the adjusting member 15b which is inserted through the through hole 15c while allowing the adjusting member 15b not only to rotate but also to move back and forth, and the connecting arm insertion hole 5e which is formed at a lower opening portion of the cylindrical member 15d. A middle portion of the adjusting member 15b is supported by the piece member 15a. A semi-circularly formed distal end portion 15g of the adjusting member 15b is brought into abutment with an adjusting member abutment surface 5i which is formed on the operation arm 5g of the knocker 5b. An externally threaded portion 15h which is formed at a distal end portion of the adjusting arm member 15b is connected to an adjusting member rotating device (not shown) such as an adjusting cable. The adjusting member 15b rotates by rotating the adjusting member rotating device, whereby the piece member 15a and the lever main body 5a moves forwards or backwards to thereby rotate the lever main body 5a via the spring member 16, and the gripping margin defined between the lever main body 5a and the accelerator grip 3 is adjusted.

The angle sensor 14 includes an operating body 14c including a rotational shaft 14b which rotates in association with the rotation of the lever main body 5a and a sensor main body 14d configured to detect a rotation amount of the rotational shaft 14b. The operating body 14c includes integrally a circular disc portion 14e, a rotational center shaft 14f, a connecting arm 14a, and the rotational shaft 14b. The circular disc portion 14e is disposed rotatably on a lower surface of the lower lever bracket 4f. The rotational center shaft 14f projects from a central portion of one side surface of the circular disc portion 14e so as to be inserted rotatably into the hollow portion 12a of the pivot 12. The connecting arm 14a projects from an outer circumference of the circular disc portion 14e so that a distal end portion is inserted into the connecting arm insertion hole 5e to thereby rotate the circular disc portion 14e in association with the rotation of the lever main body 5a. The rotational shaft 14b projects from the other side surface of the circular disk portion 14e so as to be inserted into the sensor main body 14d and to rotate in association with the rotation of the circular disc portion 14e. The sensor main body 14d includes a housing 14h which is mounted on the lower surface of the lower lever bracket 4f via the mounting bracket 13 and a rotation amount detection device 14i which is accommodated within the housing 14h to detect a rotation amount of the rotational shaft 14b which is inserted into the housing 14h. A detection signal detected in the rotation amount detection device 14i is inputted into exterior equipment via a lead wire (not shown). The operation amount detection apparatus is made up of the angle sensor 14 and the exterior equipment which is connected to the angle sensor 14 via the lead wire.

The mounting bracket 13 includes a cylindrical portion 13a which can accommodate the circular disc portion 14e and the connecting arm 14a of the operating body 14c, a first mounting portion 13c which projects from an outer circumferential portion of the cylindrical portion 13a and which includes a insertion hole 13b which is coaxial with an internally threaded hole 4h formed in the lower lever bracket 4f in a position lying closer to the handlebar 2 than the pivot insertion hole thereof, and a second mounting portion 13e which projects from a portion on the outer circumferential portion of the cylindrical portion 13a which lies opposite to the first mounting portion 13c and which includes an internally threaded portion 13d. A projecting portion 13f is provided on the cylindrical portion 13a so as to projects towards the lower surface of the lever bracket 4f. The housing 14h of the sensor main body 14d includes a first projecting piece 14m including a first passage hole 14k and a second projecting piece 14p including a second passage hole 14n. The first projecting piece 14m and the second projecting piece 14n are provided on an outer circumferential portion of a substantially cylindrical housing portion 14j which accommodates the rotation amount detection device 14i so as to project in such a way as to confront the first mounting portion 13c and the second mounting portion 13e of the mounting bracket 13, respectively.

In assembling the angle sensor 14 to the hydraulic master cylinder unit 1, firstly, the rotational center shaft 14f of the operating body 14c is inserted into the hollow portion 12a of the pivot 12, and a distal end of the connecting arm 14a is inserted into the connecting arm insertion hole 5e, whereby the circular disc portion 14e is disposed rotatably on the lower surface of the lever bracket 4f. Following this, the cylindrical portion 13a of the mounting bracket 13 is placed over an outer side of the operating body 14c, and the housing 14h of the sensor main body 14d which accommodates the rotation amount detection device 14i is superposed on the mounting bracket 13. A first mounting bolt 17 is inserted and screwed into the internally threaded hole 4h from the first passage hole 14k side with axes of the internally threaded hole 4h, the insertion hole 13b and the first passage hole 14k aligned with each another. Further, a second mounting bolt 18 is inserted and screwed into the internally threaded portion 13d from the second passage hole 14n side with axes of the internally threaded portion 13d and the second passage hole 14n aligned with each other. Thus, by securely screwing the first and second mounting bolts into the corresponding internally threaded hole and portion, the angle sensor 14 is assembled to the hydraulic master cylinder unit 1. Further, the mounting bracket 13 is positioned by inserting the projecting portion 13f provided on the cylindrical portion 13a into the recess portion 4i provided on the lower surface of the lever bracket 4f.

In this embodiment, when the rider grips on the control lever 5 when braking the vehicle, the lever main body 5a rotates and the connecting arm 14a which is inserted into the connecting arm insertion hole 5e rotates, whereby the circular disc portion 14e is caused to rotate about the rotational center shaft 14f. This causes the rotational shaft 14b to rotate. The rotation of the rotational shaft 14b is detected by the rotation amount detection device 14i of the sensor main body 14d, and a detection signal is inputted into the exterior equipment by way of the lead wire.

As is described above, the angle sensor 14 is made up of the operating body 14c and the sensor main body 14d, and therefore, compared with the conventional one, the number of parts involved is reduced, thereby making it possible to reduce the cost involved. In addition, the operating body 14c can be mounted by making use of the hollow portion 12a of the pivot 12 and the piece member 15a of the gripping margin adjusting mechanism 15, and therefore, the angle sensor 14 can be mounted compact near the control lever 5. Further, the operating body 14c includes integrally the circular disc portion 14e, the rotational center shaft 14f, the connecting arm 14a, and the rotational shaft 14b, and therefore, the rotation amount of the control lever 5 can be inputted into the sensor main body 14d in an accurate fashion, thereby making it possible to detect the rotation amount of the control lever 5 in an ensured fashion. Additionally, the angle sensor 14 is mounted on the lever bracket 4f via the mounting bracket 13, and therefore, the angle sensor 14 can be mounted stably. Further, even though the gripping margin defined between the lever main body 5a and the accelerator grip 3 is adjusted by the gripping margin adjusting mechanism 15, the rotation amount of the control lever 5 can be detected by the angle sensor 14 in an ensured fashion. In addition, the connecting arm insertion hole 5e is provided to the piece member 15a with which the adjusting member 15b is mounted, whereby the connecting arm insertion hole 5e can be formed easily.

As to the connecting arm insertion hole, the invention is not limited to the embodiment in which the connecting arm insertion hole is formed to the cylindrical portion of the gripping margin adjusting mechanism, and hence, the connecting arm insertion hole may be formed to be opened in the lever main body of the control lever. The connecting arm insertion portion of the invention is not limited to the connecting arm insertion hole. Hence, any configuration should be adopted as long as the configuration is configured to lock the connecting arm. The connecting arm mounting portion may be provided on the knocker. Further, the construction of the gripping margin adjusting mechanism is arbitrary, and the invention can also be applied to a control lever with no gripping margin adjusting mechanism provided. As to the control lever, the invention is not limited to the embodiment in which the control lever is divided into the knocker and the lever main body. Hence, the invention can also be applied to a control lever on which a knocker is provided integrally. In the invention, the control lever is described as actuating the hydraulic master cylinder, but the invention is not limited thereto. Hence, the control lever may be such as to control a brake cable.

## Claims

1. An operation amount detection apparatus for a vehicle with a handlebar (2) in which an angle sensor (14) is mounted on a control lever (5) which is mounted rotatably on a lever bracket (4e, 4f) on a side of the handlebar (2) which faces a front portion of a vehicle body via a pivot (12) and which controls a hydraulic master cylinder or a brake cable (15) which connects to a brake, the angle sensor (14) detects a rotation amount of the control lever (5),
**characterized in that**
the pivot (12) comprises a hollow portion (12a) which is opened at an end in an interior portion thereof; wherein
the control lever (5) has a connecting arm mounting portion (5e) which is formed at a rotational base portion (5c) which is supported pivotally by the pivot (12) so as to be disposed on the same surface as a surface to which the pivot (12) is opened, wherein
the angle sensor (14) comprises an operating body (14c) comprising a rotational shaft (14b) which rotates in association with the rotation of the control lever (5) and a sensor main body (14d) configured to detect a rotation amount of the rotational shaft (14b), wherein
the operating body (14c) comprises integrally a circular disc portion (14e) which is disposed rotationally on one side surface of the lever bracket (4e, 4f), a rotational center shaft which projects from a central portion of one side surface of the circular disc portion (14e) to be inserted rotationally into the hollow portion (12a) of the pivot (12), a connecting arm (14a) which projects from an outer circumference of the circular disc portion (14e) so that a distal end portion thereof is locked on the connecting arm mounting portion (5e) to cause the circular disc portion (14e) to rotate in association with the rotation of the control lever (5), and the rotational shaft (14b) which projects from the other side surface of the circular disc portion (14e) to be inserted into the sensor main body to rotate in association with the rotation of the circular disc portion, and wherein
the sensor main body comprises a housing (14h) and a rotation detection device which is accommodated in the housing (14h) and which detects a rotation amount of the rotational shaft (14b) and calculates an operation amount of the control lever (5) from the rotation amount of the rotational shaft (14b).

2. The operation amount detection apparatus for a vehicle with a handlebar (2) according to Claim 1, wherein the angle sensor (14) is mounted on one side surface of the lever bracket (4e, 4f) via a mounting bracket.

3. The operation amount detection apparatus for a vehicle with a handlebar (2) according to Claim 1 or 2, wherein
the control lever (5) is formed so as to be divided into a lever main body which is disposed in front of a grip of the handlebar (2) and a knocker which pushes on a piston of the hydraulic master cylinder,
an adjusting member is disposed between the lever main body and the knocker so as to adjust a gripping margin defined between the grip and the lever main body, and
the connecting arm mounting portion (5e) is formed on the rotational base portion (5c) of the lever main body which is supported pivotally by the pivot (12).

4. The operation amount detection apparatus for a vehicle with a handlebar (2) according to Claim 3, wherein
the lever main body and the knocker are mounted rotatably on the lever bracket (4e, 4f) via the pivot (12) in such a state that the knocker is inserted between an upper arm and a lower arm which are formed on the rotational base portion (5c) of the lever main body,
the lever main body comprises a piece member which penetrates the upper arm and the lower arm of the rotational base portion (5c) in an up-to-down direction to connect the upper arm and the lower arm together,
the adjusting member which is brought into abutment with the knocker at a distal end thereof is disposed on the piece member,
the connecting arm mounting portion (5e) which is formed by an insertion hole is provided on a lower surface of the piece member, and
the connecting arm (14a) is inserted into the connecting arm mounting portion (5e) to be locked therein.

## Patentansprüche

1. Betriebsbetragsdetektionsvorrichtung für ein Fahrzeug mit einer Lenkstange (2), in der ein Winkelsensor (14) auf einem Bedienhebel (5) befestigt ist, der über einen Drehzapfen (12) rotierbar auf einem Hebelhalter (4e, 4f) auf einer einem vorderen Abschnitt einer Karosserie gegenüberliegenden Seite der Lenkstange (2) befestigt ist und der einen hydraulischen Hauptzylinder oder ein Bremskabel (15), das mit einer Bremse verbunden ist, steuert, wobei der Winkelsensor (14) einen Rotationsbetrag des Bedienhebels (5) detektiert,
**dadurch gekennzeichnet, dass**
der Drehzapfen (12) einen hohlen Abschnitt (12a) umfasst, der an einem Ende in einem inneren Abschnitt desselben geöffnet ist; wobei
der Bedienhebel (5) einen Verbindungsarmbefestigungsabschnitt (5e) aufweist, der an einem rotierbaren Basisabschnitt (5c) ausgeformt ist, der durch den Drehzapfen (12) schwenkbar gestützt wird, um auf derselben Fläche wie eine Fläche, zu der hin der Drehzapfen (12) geöffnet ist, angeordnet zu sein, wobei
der Winkelsensor (14) einen Betriebskörper (14c), der eine Rotationswelle (14b) umfasst, die in Verbindung mit der Rotation des Bedienhebels (5) rotiert, und einen Sensorhauptkörper (14d), der dazu konfiguriert ist, einen Rotationsbetrag der Rotationswelle (14b) zu detektieren, umfasst, wobei
der Betriebskörper (14c) fest eingebaut einen kreisförmigen Scheibenabschnitt (14e), der rotierbar auf einer Seitenfläche des Hebelhalters (4e, 4f) angeordnet ist, eine Zentralrotationswelle, die von einem zentralen Abschnitt einer Seitenfläche des kreisförmigen Scheibenabschnitts (14e) abragt, um rotierbar in den hohlen Abschnitt (12a) des Drehzapfens (12) eingesteckt zu werden, einen Verbindungsarm (14a), der von einem Außenumfang des kreisförmigen Scheibenabschnitts (14e) abragt, sodass ein distaler Endabschnitt desselben auf dem Verbindungsarmbefestigungsabschnitt (5e) arretiert ist, um zu bewirken, dass der kreisförmige Scheibenabschnitt (14e) in Verbindung mit der Rotation des Bedienhebels (5) rotiert, und die Rotationswelle (14b), die von der anderen Seitenfläche des kreisförmigen Scheibenabschnitts (14e) abragt, um in den Sensorhauptkörper eingesteckt zu werden, um in Verbindung mit der Rotation des kreisförmigen Scheibenabschnitts zu rotieren, umfasst, und wobei
der Sensorhauptkörper ein Gehäuse (14h) und eine Rotationsdetektionseinrichtung, die in dem Gehäuse (14h) untergebracht ist und die einen Rotationsbetrag der Rotationswelle (14b) detektiert und einen Betriebsbetrag des Bedienhebels (5) aus dem Rotationsbetrag der Rotationswelle (14b) berechnet, umfasst.

2. Betriebsbetragsdetektionsvorrichtung für ein Fahrzeug mit einer Lenkstange (2) nach Anspruch 1, wobei der Winkelsensor (14) über einen Befestigungshalter auf einer Seitenfläche des Hebelhalters (4e, 4f) befestigt ist.

3. Betriebsbetragsdetektionsvorrichtung für ein Fahrzeug mit einer Lenkstange (2) nach Anspruch 1 oder 2, wobei
der Bedienhebel (5) so ausgeformt ist, dass er in einen Hebelhauptkörper, der vor einem Griff der Lenkstange (2) angeordnet ist, und einen Klopfer, der auf einen Kolben des hydraulischen Hauptzylinders drückt, geteilt ist,
ein Anpasselement zwischen dem Hebelhauptkörper und dem Klopfer angeordnet ist, um einen Greifspielraum, der zwischen dem Griff und dem Hebelhauptkörper definiert ist, anzupassen, und
der Verbindungsarmbefestigungsabschnitt (5e) auf dem rotierbaren Basisabschnitt (5c) des Hebelhauptkörpers, der durch den Drehzapfen (12) schwenkbar gestützt wird, ausgeformt ist.

4. Betriebsbetragsdetektionsvorrichtung für ein Fahrzeug mit einer Lenkstange (2) nach Anspruch 3, wobei
der Hebelhauptkörper und der Klopfer über den Drehzapfen (12) rotierbar auf dem Hebelhalter (4e, 4f) in einem solchen Zustand angeordnet sind, dass der Klopfer zwischen einen oberen Arm und einen unteren Arm, die auf dem rotierbaren Basisabschnitt (5c) des Hebelhauptkörpers ausgeformt sind, eingefügt ist,
der Hebelhauptkörper ein Stückelement umfasst, das den oberen Arm und den unteren Arm des rotierbaren Basisabschnitts (5c) in einer Richtung von oben nach unten durchdringt, um den oberen Arm und den unteren Arm miteinander zu verbinden,
das Anpasselement, das an einem distalen Ende des Klopfers bündig an denselben angelegt ist, auf dem Stückelement angeordnet ist,
der Verbindungsarmbefestigungsabschnitt (5e), der durch ein Einsteckloch ausgeformt ist, auf einer Unterseite des Stückelements bereitgestellt ist, und
der Verbindungsarm (14a) in den Verbindungsarmbefestigungsabschnitt (5e) eingesteckt ist, um in diesem arretiert zu sein.

## Revendications

1. Appareil de détection de quantité d'actionnement pour un véhicule avec un guidon (2) dans lequel un capteur d'angle (14) est monté sur un levier de commande (5) qui est monté de manière rotative sur un support de levier (4e, 4f) sur un côté du guidon (2) qui fait face à une partie avant d'un corps de véhicule par le biais d'un pivot (12) et qui commande un cylindre maître hydraulique ou un câble de frein (15) qui est raccordé à un frein, le capteur d'angle (14) détecte une quantité de rotation du levier de commande (5),
**caractérisé en ce que**
le pivot (12) comprend une partie creuse (12a) qui est ouverte à une extrémité dans une partie intérieure de celle-ci ; dans lequel
le levier de commande (5) présente une partie de montage de bras de raccordement (5e) qui est formée sur une partie de base rotative (5c) qui est supportée de manière pivotante par le pivot (12) de sorte à être disposée sur la même surface qu'une surface sur laquelle le pivot (12) est ouvert, dans lequel
le capteur d'angle (14) comprend un corps d'actionnement (14c) comprenant un arbre rotatif (14b) qui tourne en association avec la rotation du levier de commande (5) et un corps principal de capteur (14d) configuré pour détecter une quantité de rotation de l'arbre rotatif (14b), dans lequel
le corps d'actionnement (14c) comprend intégralement une partie de disque circulaire (14e) qui est disposée en rotation sur une surface latérale du support de levier (4e, 4f), un arbre central rotatif qui fait saillie d'une partie centrale d'une surface latérale de la partie de disque circulaire (14e) à insérer en rotation dans la partie creuse (12a) du pivot (12), un bras de raccordement (14a) qui fait saillie d'une circonférence extérieure de la partie de disque circulaire (14e) de sorte qu'une partie d'extrémité distale de celui-ci soit verrouillée sur la partie de montage de bras de raccordement (5e) pour amener la partie de disque circulaire (14e) à tourner en association avec la rotation du levier de commande (5), et l'arbre rotatif (14b) qui fait saillie de l'autre surface latérale de la partie de disque circulaire (14e) à insérer dans le corps principal de capteur pour tourner en association avec la rotation de la partie de disque circulaire, et dans lequel
le corps principal de capteur comprend un boîtier (14h) et un dispositif de détection de rotation qui est logé dans le boîtier (14h) et qui détecte une quantité de rotation de l'arbre rotatif (14b) et calcule une quantité d'actionnement du levier de commande (5) à partir de la quantité de rotation de l'arbre rotatif (14b).

2. Appareil de détection de quantité d'actionnement pour un véhicule avec un guidon (2) selon la revendication 1, dans lequel le capteur d'angle (14) est monté sur une surface latérale du support de levier (4e, 4f) par le biais d'un support de montage.

3. Appareil de détection de quantité d'actionnement pour un véhicule avec un guidon (2) selon la revendication 1 ou 2, dans lequel
le levier de commande (5) est formé de sorte à être divisé en un corps principal de levier qui est disposé en face d'une poignée du guidon (2) et un heurtoir qui pousse sur un piston du cylindre maître hydraulique,
un élément d'ajustement est disposé entre le corps principal de levier et le heurtoir de sorte à ajuster une marge de saisie définie entre la poignée et le corps principal de levier, et
la partie de montage de bras de raccordement (5e) est formée sur la partie de base rotative (5c) du corps principal de levier qui est supportée de manière pivotante par le pivot (12).

4. Appareil de détection de quantité d'actionnement pour un véhicule avec un guidon (2) selon la revendication 3, dans lequel
le corps principal de levier et le heurtoir sont montés de manière rotative sur le support de levier (4e, 4f) par le biais du pivot (12) dans un tel état que le heurtoir est inséré entre un bras supérieur et un bras inférieur qui sont formés sur la partie de base rotative (5c) du corps principal de levier,
le corps principal de levier comprend un élément de pièce qui pénètre le bras supérieur et le bras inférieur de la partie de base rotative (5c) dans une direction de haut en bas pour raccorder le bras supérieur et le bras inférieur ensemble,
l'élément d'ajustement qui est amené en butée avec le heurtoir à une extrémité distale de celui-ci est disposé sur l'élément de pièce,
la partie de montage de bras de raccordement (5e) qui est formée par un trou d'insertion est prévue sur une surface inférieure de l'élément de pièce, et
le bras de raccordement (14a) est inséré dans la partie de montage de bras de raccordement (5e) pour y être verrouillé.
